# EUROPÄISCHE PATENTANMELDUNG

(11) **EP 0 658 448 A1**
(43) Veröffentlichungstag der Anmeldung: **21.06.1995**
(21) Anmeldenummer: 94119185.0
(22) Anmeldetag: 06.12.1994
(51) Int. Cl.: B60B 17/00, B60B 9/16

(54) **Körper für gummigefederte Schienenräder und gummigefedertes Schienenrad**

(30) Priorität: 16.12.1993 DE 4342906
(71) Anmelder: VEREINIGTE SCHMIEDEWERKE GMBH, D-44793 Bochum (DE)
(72) Erfinder: Murawa, Franz Dipl.-Ing., D-44805 Bochum (DE); Bittner, Wilfried, D-45525 Hattingen (DE); Schneider, Jürgen Dr. Ing., D-44807 Bochum (DE); Fischer, Volker Dipl. Ing., D-32423 Minden (DE)
(74) Vertreter: Cohausz & Florack Patentanwälte

(57) **Zusammenfassung**

Ein Gummikörper 1 für gummielastische Schienenräder, der im entspannten Zustand einen ovalen Durchbruch 2 zur Aufnahme einer biegsamen Strombrücke 6 hat. Dieser Durchbruch nimmt im im Schienenrad eingebauten Zustand des Gummikörpers 1 unter der Vorspannung einen etwa kreisförmigen Querschnitt an.

## Beschreibung

Die Erfindung betrifft einen Gummikörper für gummigefederte Schienenräder, bei denen er in einem Ringspalt zwischen konzentrischen Radteilen unter Vorspannung sitzt, mit einem Durchbruch zwischen seinen gegenüberliegenden Anlageflächen an den Radteilen und einer im Durchbruch angeordneten, biegsamen Strombrücke.

Die Erfindung betrifft ferner ein gummigefedertes Schienenrad unter Verwendung eines derartigen Gummikörpers.

Bei einem bekannten gummigefederten Schienenrad sind in einem von einer Radfelge und einem Radreifen des Schienenrades gebildeten Ringspalt über den Umfang verteilte, unter radialer Vorspannung stehende Gummikörper angeordnet. Mindestens einer dieser Gummikörper hat den eingangs beschriebenen Aufbau (DE-GM 19 53 240, DT-AS 22 46 580). Der Durchbruch im Gummikörper hat einen im entspannten Zustand des Gummikörpers kreisförmigen Querschnitt, der in der Praxis nur etwas größer als der Durchmesser der biegsamen Strombrücken dimensioniert ist. Unter der radialen Vorspannung der Gummikörper sind die kreisförmigen Querschnitte oval verformt. Dadurch werden die freien Bewegungsräume für die biegsame Strombrücke insbesondere im Hinblick auf die Unbestimmtheit ihrer Lage beim Ein- und Ausfedern eingeschränkt, was zu Brüchen und zur Minderung der Wirksamkeit der Strombrücke führen kann. Bei modernen Hochgeschwindigkeitszügen, bei denen die Gummikörper einem erhöhten Lastwechsel bis zu 25 Lastwechsel pro Sekunde unterworfen werden, führt dies zu einer Verminderung der geforderten Lebensdauer von etwa **5 x 10⁸** Lastspielen. Bei Straßenbahnen mit einer geringeren Anzahl von Lastwechseln wird der Komfort hinsichtlich einer geforderten hohen Einfederung der Gummikörper beeinträchtigt. Der Erfindung liegt die Aufgabe zugrunde, die Haltbarkeit eines Gummikörpers mit Strombrücke zu verbessern, bzw. die Standzeit eines gummigefederten Schienenrades mit einem eine Strombrücke aufweisenden Gummikörper zu verbessern.

Diese Aufgabe wird bei einem Gummikörper der eingangs genannten Art dadurch gelöst, daß im entspannten Zustand des Gummikörpers sein Durchbruch im gesamten biegsamen Bereich der Strombrücke einen ovalen Querschnitt hat. Die Aufgabe wird weiter gelöst mit einem Schienenrad der eingangs genannten Art unter Verwendung eines solchen Gummikörpers, wobei der Ringspalt von einer Radfelge und einem Radreifen des Rades als konzentrische Radteile gebildet wird und in diesem Ringspalt eine Vielzahl von umfangsmäßig verteilt angeordneten, radial vorgespannten Gummikörpern sitzen, von denen mindestens einer die Strombrücke aufweist.

Beim Erfindungsgegenstand verformt sich der ovale Querschnitt des Durchbruchs zur Kreisform, so daß für die darin untergebrachte Strombrücke ein Optimum an Bewegungsraum beim Ein- und Ausfedern geschaffen wird. Dadurch wird die Lebensdauer eines solchen, eine Strombrücke umfassenden Gummikörpers und damit auch die Standzeit des mit einem solchen Gummikörper bestückten Schienenrades verlängert. Sofern in einem Gummikörper mehrere Durchbrüche mit Stombrücken vorgesehen sind, sollten alle Durchbrüche im entspannten Zustand eine Ovalform haben.

Nach einer Ausgestaltung der Erfindung ist vorgesehen, daß der ovale Querschnit elyptisch ist. Das Verhältnis des größten Durchmessers des ovalen Querschnitts zum kleinsten Durchmesser sollte 1,25 bis 1,35 zu 1 betragen.

Für die Kontaktierung der Strombrücke mit konzentrischen Radteilen hat sich eine aus dem gattungsbildenden Stand der Technik bekannte Maßnahme bewährt, die auch beim Erfindungsgegenstand vorteilhaft zur Anwendung kommen kann. Danach weist der Durchbruch an seinen beiden Enden jeweils eine Erweiterung auf, in der ein an der Strombrücke angeschlossener Kontaktschuh sitzt. Diese Erweiterung hat vorzugsweise einen ovalen Querschnitt und ist zu dem mittleren Bereich des Durchbruchs mit dem ovalen Querschnitt um 90 ° versetzt. Der kleinste Durchmesser der Erweiterung sollte 0 bis 20 % größer als der größte Durchmesser des mittleren Bereichs des Durchbruches sein.

Im folgenden wird die Erfindung anhand einer Ausführungsbeispiele darstellenden Zeichnung näher erläutert. Im einzelnen zeigen
- Figur 1: einen Gummikörper mit zwei Durchbrüchen und einer Strombrücke in Draufsicht,
- Figur 2: den Gummikörper nach Figur 1 im Axialschnitt,
- Figur 3: den Gummikörper nach Figur 1 in Seitenansicht,
- Figur 4: den Durchbruch des Gummikörpers nach Figur 1 in perspektivischer, abstrahierter Darstellung und
- Figur 5: ein Schienenrad mit eingebautem Gummikörper nach Figur 1 im halben Axialschnitt.

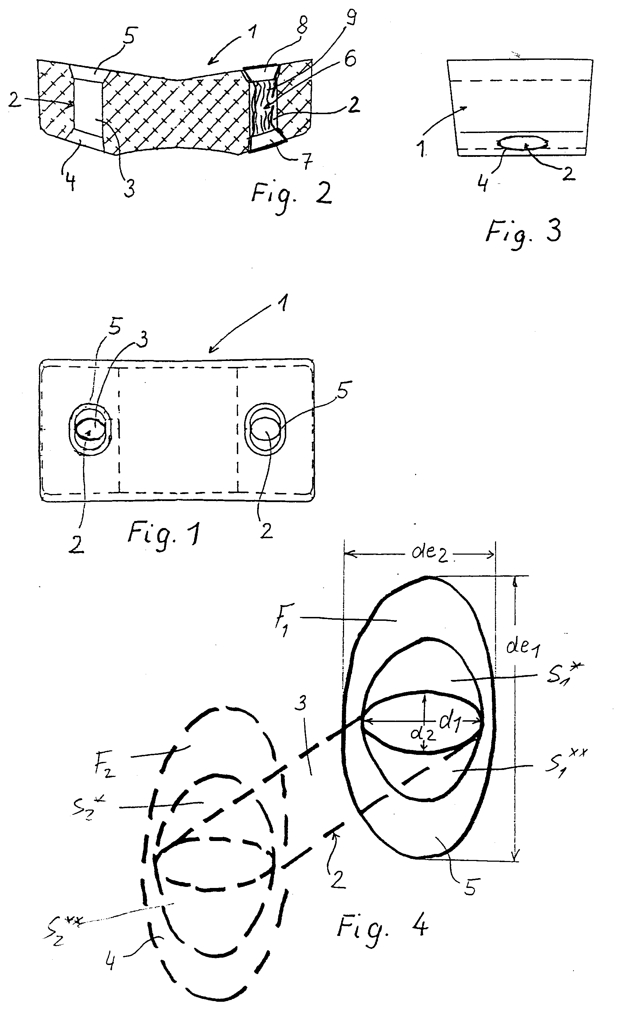

Der in den Figuren 1 bis 3 gezeigte Gummikörper 1 hat, wie Figur 2 zeigt, eine schwache V-Form und ist, wie Figur 3 zeigt, leicht keilausschnittförmig gestaltet. Der Gummikörper ist in der Zeichnung im entspannten Zustand dargestellt.

Zwischen einander gegenüberliegenden äußeren Anlageflächen weist der Gummikörper 1 zwei symmetrisch zueinander angeordnete Durchbrüche 2 auf, die im Bereich 3 ihres kleinsten Querschnittes eine Ovalform haben. Dieser Bereich 3 erstreckt sich praktisch über die gesamte Höhe des Gummikörpers 1 und endet mit einer unteren Erweiterung und einer oberen Erweiterung 5 im Gummikörper 1.

Nach der perspektivischen Darstellung der Figur 4 für den Durchbruch 2 hat der Bereich 3 mit dem kleinsten Querschnitt einen großen Durchmesser d1 in der einen Achse (im eingebauten Zustand parallel zur Radachse) und einen kleinen Durchmesser d2 in der dazu um 90 ° versetzten anderen Achse. Um 90 ° versetzt zum mittleren Bereich 2 des ovalen Durchbruchs 2 liegen die ovalförmigen Erweiterungen 4, 5, deren kleiner Durchmesser de2 etwas größer ist als der große Durchmesser d1 des Durchbruchs 2. Entsprechend größer ist der große Durchmesser de1. Die Erweiterungen 4, 5 haben am Rand abfallende Flanken F1, F2 und innenliegende ebene Stützflächen S1*, S1**, S2*, S2**.

In dem in Figur 2 rechten Durchbruch 2 ist eine Strombrücke 6 eingebaut, die aus einem unteren Kontaktschuh 7 und einem oberen Kontaktschuh 8 sowie einem daran angeschlossenen, biegeelastischen Stromleiter 9 besteht. Die Kontaktschuhe 7, 8 sitzen in den Erweiterungen 4, 5, während der biegeelastische Stromleiter 9 im mittleren Bereich 3 des Durchbruchs 2 sich erstreckt.

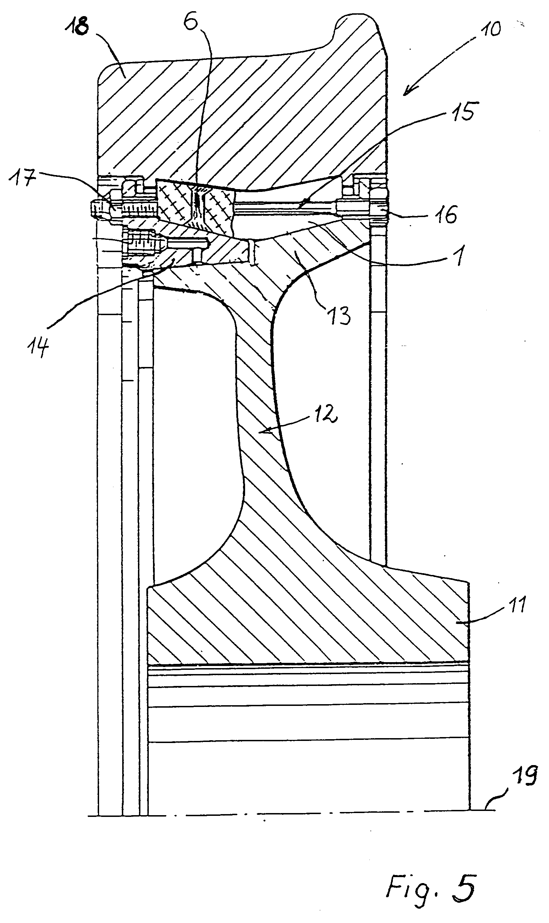

Das gummigefederte Schienenrad gemäß Figur 5 mit seiner nur angedeuteten Radachse 19 besteht im wesentlichen aus einem eine Radnabe 11 aufweisenden Radkörper 12 und einen darauf mit vorgespannten Gummikörpern gehaltenen Radreifen 18. Die Schnittdarstellung zeigt gerade den speziellen Gummikörper 1 gemäß den Figuren 1 bis 4.

Der Radkörper 13, 14 weist ein einstückig mit ihm ausgebildetes Felgenteil 13 und ein darauf unter Pressitz sitzendes, als Ring ausgebildetes loses Felgenteil 14 auf. Zusätzlich sind gleichmäßig über den Umfang verteilte, in Zwischenräumen zwischen den Gummikörpern 1 liegende Schraubenbolzen 15 vorgesehen, deren Kopf 16 an einer Schulter des Felgenteils 13 und deren Mutter 17 an einer Schulter des ringförmigen Felgenteils 14 anliegen. Auf diese Art und Weise wird der mit Pressitz festsitzende Felgenteil 14 zusätzlich gesichert.

Wie die anderen Gummikörper liegt der spezielle Gummikörper 1 gemäß Figuren 1 bis 4 unter Vorspannung radkörperseitig an den Felgenteilen 13, 14 und radreifenseitig an dem Radreifen 18 an. Die Figur 5 mit dem geschnittenen Teil des Gummikörpers 1 zeigt, daß die Strombrücke 6 mit ihren Kontaktschuhen 7, 8 unter der in Gummikörpern herrschenden Vorspannung einerseits an den Felgenteilen 13, 14 des Radkörpers 12 und andererseits am Radreifen 18 angepresst sind.

Bei dem gummigefederten Schienenrad 10 gemäß Figur 5 sind die Gummikörper und damit auch der die Strombrücke 6 umfassende Gummikörper 1 vorgespannt. Aufgrund dieser Vorspannung ist der im entspannten Zustand im mittleren Bereich 3 ovale Querschnitt des Durchbruchs 2 in Richtung der Kreisform verformt worden, so daß für die im Durchbruch 2 untergebrachte Strombrücke 6 mit ihrem biegsamen Teil 9 beim Ein- und Ausfedern genügend freier Bewegungsraum zu Verfügung steht.

## Patentansprüche

1. Gummikörper für gummigefederte Schienenräder, bei denen er in einem Ringspalt zwischen konzentrischen Radteilen (13, 14, 18) unter Vorspannung sitzt, mit einem Durchbruch (2) zwischen seinen gegenüberliegenden Anlageflächen an den Radteilen (13, 14, 18) und einer in dem Durchbruch (2) angeordneten, biegsamen Strombrücke (6),
**dadurch gekennzeichnet,** daß im entspannten Zustand des Gummikörpers (1) sein Durchbruch (2) im gesamten biegsamen Bereich der Strombrücke (6) einen ovalen Querschnitt hat.

2. Gummikörper nach Anspruch 1,
**dadurch gekennzeichnet**, daß der ovale Querschnitt elyptisch ist.

3. Gummikörper nach Anspruch 1 oder 2,
**dadurch gekennzeichnet**, daß das Verhältnis des größten Durchmessers d1 des ovalen Querschnittes zum kleinsten Durchmesser d2 des ovalen Querschnittes 1,25 bis 1,35 zu 1 beträgt.

4. Gummikörper nach einem der Ansprüche 1 bis 3,
**dadurch gekennzeichnet**, daß der Durchbruch an seinen beiden Enden jeweils eine Erweiterung (4, 5) aufweist, in der ein an der Strombrücke (6) angeschlossener Kontaktschuh (7, 8) sitzt.

5. Gummikörper nach Anspruch 4,
**dadurch gekennzeichnet**, daß jede Erweiterung (4, 5) einen ovalen Querschnitt hat und zu dem im Querschnitt ovalen mittlerem Bereich (3) des Durchbruchs (2) um 90 ° versetzt ist, wobei der kleinste Durchmesser de2 der Erweiterung (4, 5) 0 bis 20 % größer als der größte Durchmesser d1 des mittleren Bereichs (3) des Durchbruchs (2) ist.

6. Gummigefedertes Schienenrad, unter Verwendung eines Gummikörpers nach einem der Ansprüche 1 bis 5,
**dadurch gekennzeichnet**, daß der Ringspalt von einer Radfelge (13, 14) des Radkörpers und einem Radreifen (18) als konzentrische Teile gebildet wird, wobei in dem Ringspalt eine Vielzahl von umfangsmäßig verteilt angeordneten, radial vorgespannten Gummikörpern sitzen, von denen mindestens einer (1) die Strombrücke (6) umfasst.
